# EUROPEAN PATENT APPLICATION

(11) **EP 1 672 266 A2**
(43) Date of publication of application: **21.06.2006**
(21) Application number: 05026539.6
(22) Date of filing: 06.12.2005
(51) Int. Cl.: F16L 37/23, F16L 37/098

(54) **Quick coupling for tubing with calibrated release**

(30) Priority: 16.12.2004 IT mn20040039
(71) Applicant: Zamar S.R.L., 46029 Suzzara MN (IT)
(72) Inventor: Zanotti Mario, 46029 Suzzara (prov. of Mantova) (IT)
(74) Representative: Alagem Modiano, Lara S.

(57) **Abstract**

A quick coupling for tubing with calibrated release, comprising two terminals (1,2) adapted to be rigidly coupled respectively to the ends of the tubing to be connected, the terminals being locked to each other by way of elastically resilient means (3,4,5), so as to render the terminals independent upon reaching a preset value of a force applied in a direction that induces disengagement.

## Description

The present invention relates to a quick coupling for tubing with calibrated release.

It is known that in many fields of technology there are tubes made of a deformable material, such as rubber, which are subjected to pulling forces which must not exceed certain values in order to avoid compromising the operation of the elements connected to such tubing.

This is the case, for example, of the zootechnical field and of horse rearing: animals subjected to therapeutic treatments requiring the supply of liquids drawn from nearby devices may in fact, with sudden movements, or even with substantial changes of position, determine such pulling forces on the tubing that conveys the liquids as to cause severe malfunctions or even tear out such devices.

The aim of the present invention is therefore to provide a quick coupling which, fitted on the tubing to be protected, disengages when a preset traction force is reached.

This aim is achieved by a quick coupling for tubing with calibrated release, according to the invention, characterized in that it comprises the features disclosed in the appended claims.

Further characteristics and advantages of the present invention will become better apparent from the description of some embodiments thereof, illustrated by way of non-limiting example in the accompanying drawings, wherein:
Figure 1 is a longitudinal sectional view of a coupling according to a first embodiment;
Figure 2 is a schematic sectional view, taken along the line II-II of Figure 1;
Figures 3 and 5 are longitudinal sectional views of a coupling according to a first variation and a second variation;
Figures 4 and 6 are sectional views, taken respectively along the lines IV-IV of Figure 3 and VI-VI of Figure 5.

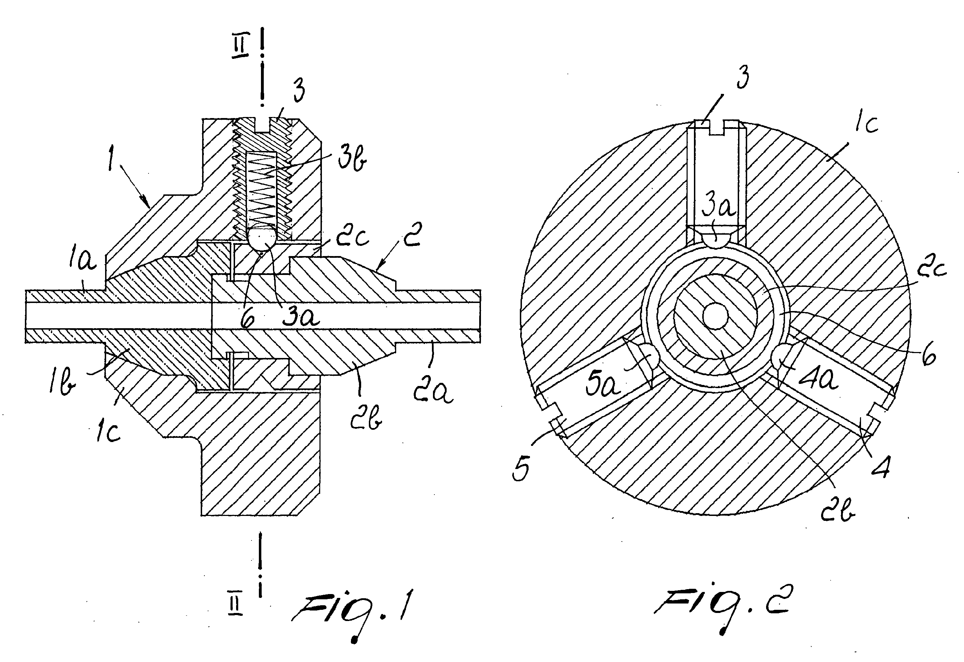

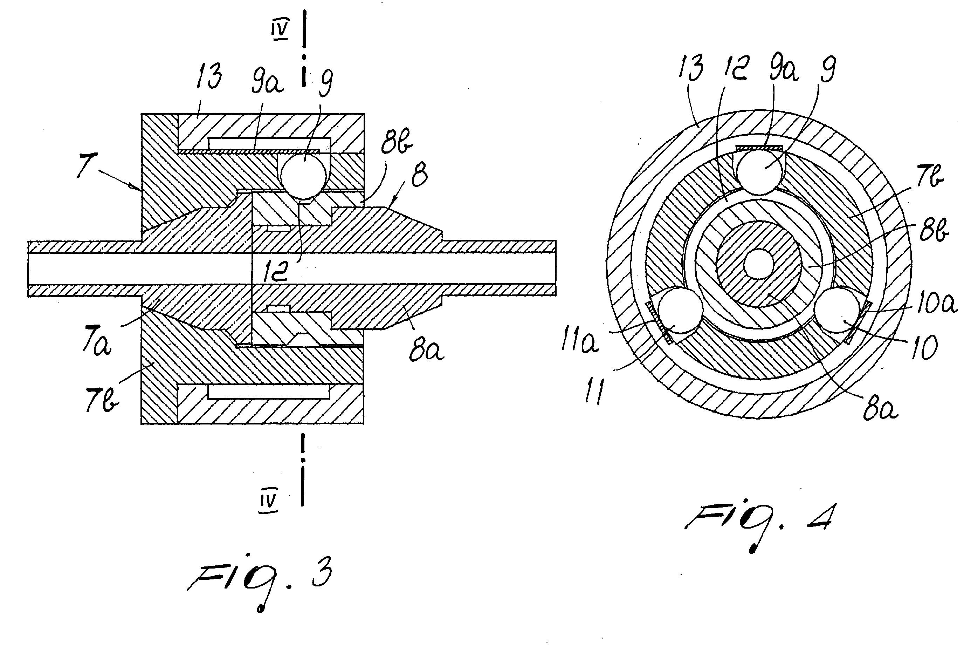

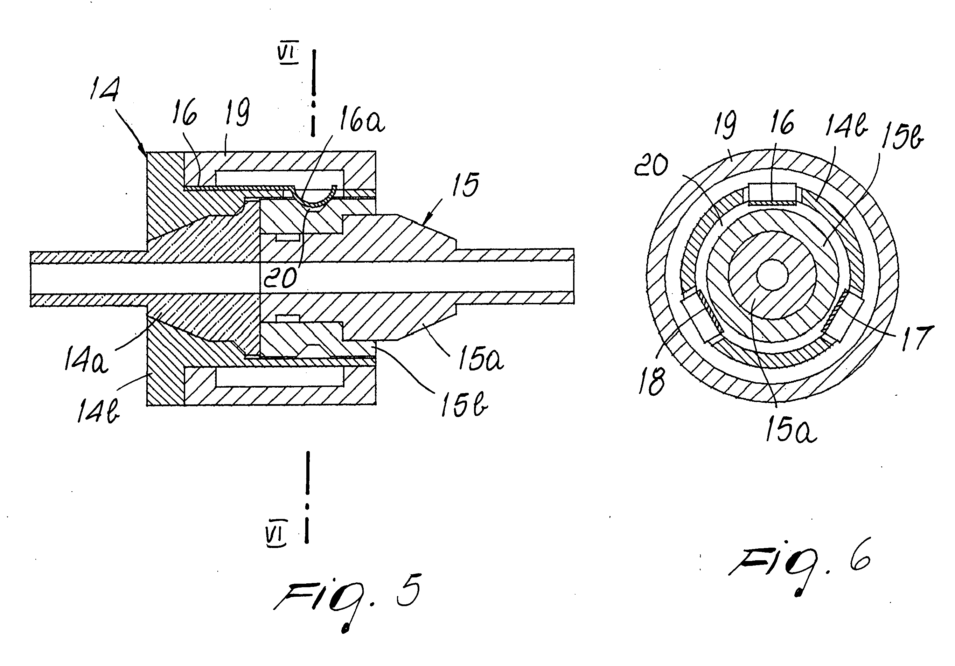

With reference to Figures 1 and 2, reference numerals 1 and 2 generally designate two terminals, which are designed to be rigidly coupled at the couplings 1a, 2a respectively to the ends of the tubing to be connected.

Terminal 1 is formed by two elements 1b, 1c, which are assembled by interference, and in the same manner terminal 2 is formed by elements 2b, 2c.

The element 1c of the terminal 1 is provided with at least one and preferably three threaded grub screws 3, 4, 5, which are provided with balls 3a,4a,5a respectively, pushed by springs comprised within said grub screws, such as 3b for the grub screw 3, and adapted to engage a groove 6 provided on the surface of the element 2c of the terminal 2.

In the situation shown in the figures, the two terminals are rigidly coupled and the tubing connected thereto is active, but they are ready to disengage as a consequence of the escape of the balls 3a, 4a, 5a from the groove 6 if a pulling force that exceeds a value which can be defined easily by simple calibration of the springs such as 3b is applied between them.

Figures 3 and 4 illustrate a first variation of the invention, in which reference numerals 7 and 8 generally designate two terminals formed respectively by elements 7a, 7b and 8a, 8b.

The two terminals are locked to each other by means of the balls 9, 10, 11 comprised within the terminal 7, which are pushed so as to engage the groove 12 provided on the surface of the element 8b of the terminal 8 respectively by laminas 9a, 10a, 11 a made of a material having high-level elastic properties, which are interlocked by means of element 13 associated by interference.

The force capable of determining the mutual disengagement of the terminals 7 and 8 from the situation shown in the figures, with escape of the balls 9, 10, 11 from the groove 12, is determined by the choice of the laminas 9a, 10a, 11 a, which can be more or less elastically resilient.

A second variation of the invention, shown in Figures 5 and 6, comprises terminals 14 and 15, formed respectively by elements 14a, 14b and 15a, 15b.

Such terminals are kept locked to each other by laminas 16, 17, 18; one end of the laminas is locked by interlocking, by means of the element 19, on the element 14b of the terminal 14, and the laminas are shaped at the other end, such as 16a for the lamina 16, so as to engage a groove 20 provided on the surface of the element 15b of the terminal 15.

In this case also, the disengagement force of the terminals 14 and 15 is determined by the choice of the laminas 16, 17, 18.

The described invention is susceptible of numerous other modifications and variations, all of which are within the scope of the appended claims; all the details may further be replaced with other technically equivalent elements.

The disclosures in Italian Patent Application No. MN2004A000039 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A quick coupling for tubing with calibrated release, **characterized in that** it comprises two terminals adapted to be rigidly coupled respectively to the ends of the tubing to be connected, said terminals being locked to each other by means of elastically resilient means, so as to render said terminals independent upon reaching a preset value of a force applied in a direction that induces disengagement.

2. The coupling according to claim 1, **characterized in that** said elastically resilient means, comprise at least one grub screw which is engaged on a first terminal and is provided, at the end directed toward the second terminal, with a ball which is pushed by a spring comprised within said grub screw, said ball being adapted to engage a cavity provided in said second terminal.

3. The coupling according to claim 1, **characterized in that** said elastically resilient means comprise at least one ball comprised within a first terminal and pushed by a lamina made of a material with high-level elastic properties, which is associated by interlocking at one end with said first terminal and is adapted to make contact with said ball at the free end, said ball being adapted to engage a cavity provided in the second terminal.

4. The coupling according to claim 1, **characterized in that** said elastically resilient means comprise at least one lamina made of a material with high-level elastic properties, associated by interlocking at one end with a first terminal and adapted to make contact at the appropriately shaped free end with a cavity provided in the second terminal.
